# EUROPÄISCHE PATENTANMELDUNG

(11) **EP 0 523 530 A1**
(43) Veröffentlichungstag der Anmeldung: **20.01.1993**
(21) Anmeldenummer: 92111594.5
(22) Anmeldetag: 08.07.1992
(51) Int. Cl.: B23D 59/00, B27G 19/10, B23Q 9/00

(54) **Führungslineal für Handkreissägen**

(30) Priorität: 13.07.1991 DE 4123316
(71) Anmelder: Karl M. Reich, Maschinenfabrik GmbH, 72607 Nürtingen (DE)
(72) Erfinder: Kuhn, Reiner, W-7740 Nürtingen (DE); Raichle, Dieter, W-7440 Nürtingen (DE); Weingart, Michael, W-7312 Kirchheim (DE)

(57) **Zusammenfassung**

Bei einem Führungslineal (1) für Handkreissägen (2) zum Trennen von Werkstücken (5) aus Holz oder dgl. ist eine auf dem Werkstück (5) angeordnete Halteleiste (9) vorgesehen, an der eine mit einer Führungsrippe (4) versehene Führungsplatte (6) für die Handkreissäge (2) quer zur Vorschubrichtung der Handkreissäge (2) verschiebbar gelagert ist.

Damit ist es insbesondere zum Trennen von beschichteten Werkstücken (5) möglich, zunächst die Deckschicht im Gleichlauf in je einer Vorritzstellung des Sägeblatts (3) einzusägen und anschließend den gesamten Querschnitt des Werkstücks (5) im Gegenlauf zwischen den Vorritzstellungen zu durchtrennen.

## Beschreibung

Die Erfindung bezieht sich auf ein Führungslineal für Handkreissägen zum Trennen von Werkstücken aus Holz oder dgl. gemäß Oberbegriff von Anspruch 1.

Besonders zum Trennen von beschichteten Werkstücken aus Holz oder dgl. ist es dazu aus der Deutschen Patentanmeldung P 40 01 331.6 bekannt, zunächst mit der entlang eines Führungslineals führbaren Handkreissäge die Deckschicht im Gleichlauf in je einer quer zur Sägerichtung verschobenen Vorritzstellung des Sägeblatts einzusägen und anschließend den gesamten Querschnitt des Werkstücks im Gegenlauf zwischen den Vorritzstellungen zu durchtrennen.

Dabei wird das Sägeblatt durch eine einfache Verschiebevorrichtung in die gewünschte Vorritzstellung gebracht, so daß nach Ausführung dieser Vorritzschnitte der entgültige Trennschnitt im Gegenlauf ohne Beschädigung der Deckschicht durchgeführt werden kann.

Soll das Werkstück nur besäumt werden, dann gehört der Säumling mit seiner Deckschicht zum Abfall, und es ist nur nötig, einen Vorritzgang durchzuführen. Dies ist der häufigste Anwendungsfall und der Arbeitsablauf wird damit erheblich verkürzt.

Aufgabe der vorliegenden Erfindung ist die Schaffung einer weiteren Verschiebevorrichtung für die Handkreissäge, mit der diese auf einfache Weise in die gewünschten Stellungen gebracht werden kann.

Diese Aufgabe wird erfindungsgemäß gelöst durch das Merkmal im Kennzeichen von Anspruch 1.

Durch die erfindungsgemäße Aufteilung des Führungslineals ergibt sich eine einfache und preisgünstige Verschiebemöglichkeit für die Handkreissäge, für die keine weiteren Verschiebelemente notwendig sind.

Bei der Ausführung von Gehrungsschnitten schwingt das Sägeblatt in Richtung Führungslineal, so daß es nötig ist, die Handkreissäge quer zu diesem Führungslineal zu verschieben. Die Querverschiebung der erfindungsgemäßen Handkreissäge erlaubt es somit, diese sowohl zum Vorritzen als auch zur Ausführung von Gehrungsschnitten zu verwenden.

Das erfindungsgemäße Führungslineal lässt sich neben Handkreissägen auch für andere Elektrowerkzeuge wie z.B. Stichsägen, Oberfräsen usw. verwenden, bei denen beim bearbeiten des Werkstücks eine Verschiebung quer zur Vorschubrichtung nötig ist.

Im folgenden ist ein Ausführungsbeispiel der Erfindung unter Bezugnahme auf die Zeichnungen näher beschrieben.

Es zeigen:
- Fig. 1: Führungslineal, von oben
- Fig. 2: Schnitt nach Linie II-II in Fig. 1.

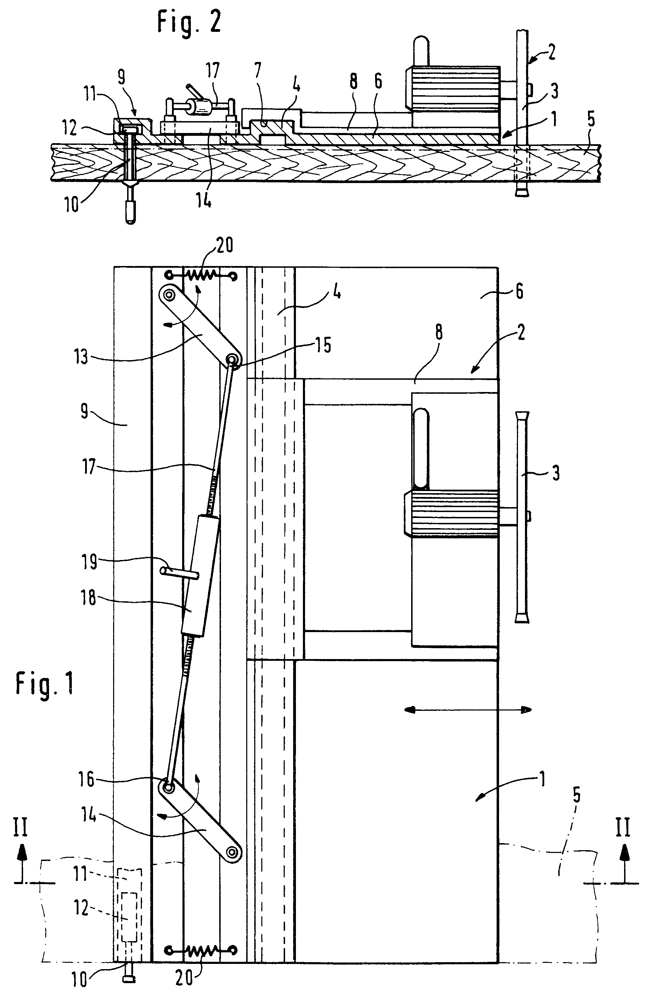

Fig. 1 zeigt ein Führungslineal 1, auf dem eine Handkreissäge 2 mit einem Sägeblatt 3 in Vorschubrichtung verschiebbar gelagert ist. Zur Führung der Handkreissäge 2 dient eine Führungsrippe 4 einer auf dem Werkstück 5 aufliegenden Führungsplatte 6, die in eine Führungsrinne 7 der Grundplatte 8 der Handkreissäge 2 eingreift (siehe auch Fig. 2).

Während die Führungsplatte 6 zur Einstellung der verschiedenen Trennstellungen von Sägeblatt 3 auf dem Werkstück 5 quer zur Vorschubrichtung der Handkreissäge 2 verschiebbar angeordnet ist, ist als weiterer Teil des Führungslineals 1 eine Halteleiste 9 mit Schraubzwingen 10 am Werkstück 5 angeklemmt. Dazu weist die Halteleiste 9 einen C-förmigen Querschnitt 11 auf, in den die Pratze 12 der Schraubzwinge 10 eingreift.

Bei der Halteleiste 9 sind zwei parallele Laschen 13 und 14 schwenkbar gelagert, die mit ihren freien Enden ebenfalls schwenkbar mit der Führungsplatte 6 verbunden sind.

Zwischen dem einen Ende 15 der Lasche 13 und dem gegenüberliegenden Ende 16 der Lasche 14 ist ein Verbindungsgestänge 17 vorgesehen, dessen Länge durch ein Einstellorgan 18 veränderbar ist. Dieses Einstellorgan 18 ist als ein Spannschloß ausgebildet, das durch einen Betätigungshebel 19 um 180^{o} geschwenkt werden kann. Dabei verschiebt sich die Führungsplatte 6 quer zur Vorschubrichtung der Handkreissäge 2 in die gewünschten Trennstellungen.

Zur Eliminierung des Gewindespieles im Spannschloß dienen zwei Zugfedern 20, die zwischen Führungsplatte 6 und Halteleiste 9 angeordnet sind.

## Patentansprüche

1. Führungslineal für Handkreissägen zum Trennen von Werkstücken aus Holz oder dgl. mit einer Führungsrippe, die in eine Führungsrinne der Grundplatte der Handkreissäge eingreift, **dadurch gekennzeichnet**, daß eine auf dem Werkstück (5) angeordnete Halteleiste (9) vorgesehen ist, an der eine mit der Führungsrippe (4) versehene Führungsplatte (6) quer zur Vorschubrichtung der Handkreissäge (2) verschiebbar gelagert ist.

2. Führungslineal nach Anspruch 1, **dadurch gekennzeichnet**, daß die Führungsplatte (6) mit mindestens zwei parallelen, schwenkbaren Laschen (13,14) an der Halteleiste (9) gelagert ist.

3. Führungslineal nach Anspruch 2, **dadurch gekennzeichnet**, daß zwischen je einer Schwenkachse (15,16) der Laschen (13,14) zwischen Halteleiste (9) und Führungsplatte (6) ein Verbindungsgestänge (17) vorgesehen ist, dessen Länge durch ein Einstellorgan (18) veränderbar ist.

4. Führungslineal nach Anspruch 3, **dadurch gekennzeichnet**, daß das Einstellorgan (18) als Spannschloß ausgebildet ist.
